# EUROPEAN PATENT SPECIFICATION

(11) **EP 1 316 169 B1**
(45) Date of publication and mention of the grant of the patent: **16.06.2004**
(21) Application number: 01966897.9
(22) Date of filing: 30.08.2001
(51) Int. Cl.: H04L 9/32, H04L 12/06

(54) **PUBLIC KEY INFRASTRUCTURE SYSTEMS AND METHODS**
VORRICHTUNG UND VERFAHREN FÜR INFRASTRUKTUR MIT ÖFFENTLICHEN SCHLÜSSELN
SYSTEMES ET PROCEDES D'INFRASTRUCTURES DE CLE PUBLIQUE

(30) Priority: 01.09.2000 US 653802
(43) Date of publication of application: 04.06.2003
(73) Proprietor: 724 Solutions Inc., Toronto, Ontario M2P 1N6 (CA)
(72) Inventor: HAGI, Sharon, Thornhill, Ontario L4J 8E6 (CA); BROWN, Murray, James, Mississauga, Ontario L5J 4R4 (CA)
(74) Representative: Liesegang, Roland, Dr.-Ing.
(86) International application number: PCT/CA2001/001233
(87) International publication number: WO 2002/019609

(56) References cited:
- WO-A-94/15294
- WO-A-99/07164
- MONTSE RUBIA, JUAN CARLOS CRUELLAS, MANUEL MEDINA: "Removing Interoperability Barriers Between the X.509 and EDIFACT Public Key Infrastructures: The DEDICA Project" PUBLIC KEY CRYPTOGRAPHY '99, 1 - 3 March 1999, pages 245-262, XP001061201 Kamakura,Japan

## Description

### FIELD OF THE INVENTION

This invention relates generally to data communication security, and more particularly to public key infrastructure (PKI) systems and methods.

### BACKGROUND OF THE INVENTION

### Introduction to PKI

With the increasing popularity of electronic commerce over insecure computer networks such as the Internet, information security has become an issue which is key to continued growth of this medium. Security is of particular importance in financial services applications such as on-line banking, brokerage, and payment.

Public Key Infrastructure (PKI) is a known set of products, services and technologies which has the potential to provide the required security for electronic commerce. PKI enables the use of public key cryptography and digital certificates in a distributed computing system. PKI constitutes the core of a secure network's security infrastructure and ensures authentic and private communications.

In a public-key cryptosystem, the abilities to perform encryption and decryption are separated. The encryption algorithm employs a public key to allow the sender to encrypt the message. The public key cannot be used to decrypt the message. The decryption algorithm employs a different (but mathematically related) private key. Only the related private key can be used to decrypt the message. If a person selects and publishes their public key in a public directory, then everyone can gain access and use that one public key to encrypt messages for that person. The private key is kept secret so that only the intended recipient can decrypt the message. The specific information security features of PKI are illustrated in detail below.

### Message Confidentiality

If a sender wishes to forward an encrypted message to a recipient, the sender locates the recipient's public key in the public directory (described above). The sender then encrypts the message using the recipient's public key. The sender sends the encrypted message to the recipient, which the recipient decrypts using the recipient's private key. Message confidentiality is assured because only the recipient can decrypt the message (since only the recipient knows the private key).

However, message confidentiality is not sufficient, and additional security measures are required. For example, anyone could have encrypted the message and sent it to the recipient. While the message is confidential, there is no assurance that the message came from the sender. Consequently, PKI includes the additional features set out below.

### Digital Signatures

Digital signatures are also used as part of conventional PKI systems to ensure data origin authentication, data integrity, and non-repudiation. The difference between the use of a public-key cryptosystem for signing and its use for encrypting is that the order in which the keys are used is reversed. In data encryption, the message is encrypted by the sender using the recipient's public key and decrypted by the recipient using the recipient's private key. To create a digital signature, the sender uses his/her private key to compute his/her signature. The recipient then verifies, the signature using the sender's public key. The process of sending an encrypted message with a digital signature is illustrated below.

The sender first transforms the message using a known hash function. The output of the hash function is a value which is specific to the content of the message itself. This output is referred to as a message digest. The sender then signs the message by transforming the message digest using the sender's private key. The output of this transformation (referred to below as "O") is appended to the message (which is encrypted as described above to assure confidentiality).

In order to verify the sender's signature, the recipient first retrieves the sender's public key and decrypts the message. Then the recipient computes the message digest from the decrypted message using the publicly available hash function. Finally, the recipient transforms O using the recipient's public key and compares the result with the message digest. If the message is altered in any way, the message digest value of the new message will differ completely. This provides a mechanism for insuring the integrity of the signed message. If the result is identical to the message digest, then the sender's signature is valid. If not, then there is no assurance that the message was sent by the sender.

The recipient is assured that only the sender could have computed the signature, since only the sender can be in possession of the correct private key, and therefore only the sender could have transformed the message digest to O. Accordingly, data origin authentication is provided. Furthermore, when the sender signs the message, the message cannot be altered, since changing the message would change the message digest, and O would no longer represent a valid signature on the new message. Thus data integrity is provided. Finally, non-repudiation is provided because when the sender appended his/her digital signature to the message, the sender cannot later deny signing the message.

### User Authentication

Even with the use of digital signatures, user authentication is not provided. User authentication is necessary to ensure that the recipient is dealing with the sender in "real time". If user authentication is not available, a third party may intercept a signed message. Although the recipient is assured that the message originated from the sender, the third party may save the sender's signature to identify itself as a sender at a later date. User authentication is provided as described below.

When the sender commences a real-time communication session with a recipient and desires user authentication, the sender first generates a random number (N_{sender}), and sends it to the recipient. N_{sender} is referred to as a "challenge". The message (from which the hashed message digest is formed in the digital signature process) is modified by including N_{sender} in the message. Provided the digital signature is valid, and the signed value N_{sender} is the same as the challenge generated, then the sender is assured that he/she is communicating with the recipient in real-time.

### Protocols

The user authentication process is a simple example of a cryptographic protocol. A protocol is a sequence of messages and responses passed between sender and recipient that provide one or both parties with some service. There are a number of PKI protocols known in the prior art, including PKIX-CMP, Adam & S. Farrell et al., Internet X.509 Public Key Infrastructure Certificate Management Protocols, IETF PKIX (X.509) working group, http://www.ietf.org/rfc/rfc2510.txrt ("RFC2510"), Myers, Adam, Solo et al. Internet X.509 Certificate Request Message Format, IETF PKIX (X.509) working group, http://www.ietf.org/rfc/rfc2511.txt ("RFC2511"), CMS, OCSP, PKCS#10, CMC, PGP, WPKI (WAP Forum), and more.

### Certification Authorities ("CAs")

The implementation of a PKI system is more complex than simply programming routines to implement a public-key cryptosystem and choosing a key. Responsibility must be assigned for the storage of the users' public keys. This directory of public keys is crucial to security and is usually provided by a PKI service provider. For example, one user may place a public key in the directory and claim that it belongs to a second user. If a sender were to send information to the second user, the first user would be able to decrypt it. All users must have confidence that the public keys they retrieve are authentic and belong to the specified user.

Accordingly, there is a requirement for information to bind a user to his/her public key. Conventionally, this binding is usually provided by a certificate. Certificates are issued by a Certification Authority (CA), which is a third party trusted by all users of the PKI system.

A CA creates, distributes, revokes, and generally manages certificates. To generate a user's certificate, the CA checks the user's identity and that a particular public key really is that user's public key. The CA then signs with its own private key a message comprised of the user's identification (information such as name, address, and email address), the user's public key and any other information, such as expiration date of the certificate and user privileges.

When a sender wishes to obtain a recipient's public key, he/she retrieves the recipient's certificate from a public directory, and verifies the CA's signature on the certificate. The sender is then assured by the trusted CA that the public key obtained is the recipient's public key. The sender can now use the recipient's public key to encrypt a message to the recipient to verify the recipient's signature.

Each user must obtain an authentic copy of the CA's public key, but since this only requires the distribution of one key, it is practical to carry out this distribution off-line, possibly at the same time as each user certifies their own public key in person with the CA. Registration of the user in the PKI system in accordance with the CA policy (such as verifying the user's identity) is carried out by a separate trusted party, the Registration Authority (RA). Alternatively, the CA may also assume the RA role.

Hierarchical PKI systems are known where parties to which digital certificates may be issued might be either end-entities (e.g. users or client devices) or other subordinate CAs. In a hierarchical PKI system, the top level CA is referred to as the Root CA, and is typically self-signed. Each subordinate CA is issued a certificate signed by its parent CA. Conventional PKI systems are only capable of operating on a single network and supporting a single protocol (such as TCP/IP protocol suite over packet switched networks). Consequently, conventional PKI systems are unable to support user devices, which operate over different networks or communicate using different protocols.

The publication MONTSE RUBIA, JUAN CARLOS CRUELLAS, MANUEL MEDINA: "Removing Interoperability Barriers Between the X.509 and EDIFACT Public Key Infrastructures: The DEDICA Project" discloses a system comprising gateway with a two device interfaces using a different communications formats; the gateway performs the translation between the formats.The problem of this prior art is that in the case of the numerous protocols the translation between the protocols and the interoperability across different networks remains difficult.

Accordingly, there is a need for a PKI system and method which permits interoperability across different networks and which supports numerous protocols. Also, there is a need for a modular and scaleable PKI system, which allows for addition of support for additional networks and protocols.

### SUMMARY OF THE INVENTION

It is therefore an object of the present invention to provide a PKI system, a PKI gateway and a method as defined in claims 1 - 35.

Further features of the invention will be described or will become apparent in the course of the following detailed description.

### BRIEF DESCRIPTION OF THE DRAWINGS

In order that the invention may be more clearly understood, the preferred embodiment thereof will now be described in detail by way of example, with reference to the accompanying drawings, in which:
Fig. 1 is a block diagram of a PKI system in accordance with the present invention;
Fig. 2 is a schematic diagram of components of a remote device according to a preferred embodiment of the present invention;
Fig. 3 is a block diagram of a wireless network connectivity model between a remote device and PKI gateway according to a first embodiment of the present invention;
Fig. 4 is a block diagram of a packet-switched network connectivity model between a remote device and PKI gateway according to another embodiment of the present invention;
Fig. 5 is a block diagram of a circuit-switched network connectivity model between a remote device and PKI gateway according to another embodiment of the present invention
Fig. 6 is a block diagram of a PKI gateway according to a preferred embodiment of the present invention; and
Fig. 7 is a block diagram of a PKI service provider according to a preferred embodiment of the present invention.

### DETAILED DESCRIPTION

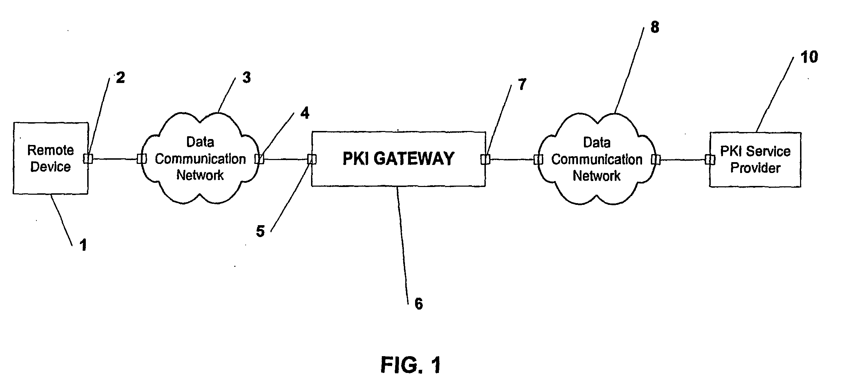

FIG. 1 illustrates a PKI system in accordance with the present invention. Any number of PKI enabled remote devices 1 (although only one is shown for clarity) may communicate with a PKI gateway 6 via a conventional first data communication network 3. Preferably, the remote devices 1 include a network/device protocol interface 2 to communicate with the first data communication network 3, and the first data communication network 3 includes a network gateway, router, or switch 4 which may communicate with a device interface 5 in the PKI gateway 6.

The PKI gateway 6 may include any number of device interfaces 5, although, for clarity, only one is shown in Fig. 1. All of the remote devices 1 which use a specific communication format communicate with the PKI gateway 6 through one or more corresponding device interfaces 5 specific to that communication format. For the purposes of this specification, remote devices 1 communicate using different communication formats if:
(i) the remote devices 1 communicate over different first data communication networks 3 (although for clarity, only one first data communication network 3 is shown in Fig. 1); or
(ii) the remote devices 1 communicate over the same data communication network 3, but use a different protocol, such as specific network/device protocols known in the art.

The PKI gateway 6 routes the communication from the remote device 1 to a PKI service provider 10 via a conventional second data communication network 8, which may be the same network as the first data communication network 3 or a different network. The PKI gateway 6 may include at least one PKI service interface 7 to enable communication with the PKI service provider 10. The PKI gateway may communicate with additional PKI service providers (not shown), in which case the PKI gateway 6 would include additional PKI service interfaces (not shown) for each PKI service provider that communicates using a different communication format.

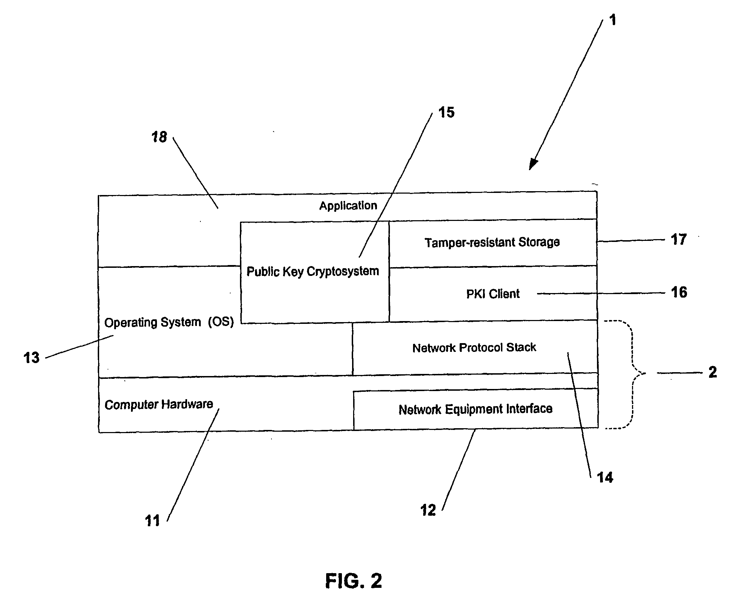

FIG. 2 illustrates components for conventional remote devices 1, such as digital phones, personal digital organizers (PDAs), personal computers, two way pagers, set top boxes, etc. A remote device 1 includes computer hardware 11, such as one or more CPUs and memory along with any number of interconnected peripherals. The device hardware may also include a number of network equipment interfaces 12. These interfaces usually constitute the physical layer of a number of network protocol stacks 14 (only one is shown for clarity) which in combination with the network equipment interfaces 12 form the network/device protocol interface 2. The network equipment interface 12 may include, for example, wireless access equipment such as RF transceivers, modulation and encoding circuits, Infrared (IR) ports, Microwave equipment, etc. Serial interface connections such as RJ-45, RJ-12, EIA-232D, RS-232, V.24, V.36, V.35, V.11, X.21, Integrated Services Digital Networks (ISDN) interfaces including for example I.430 and I.431, LAN interfaces including Token-Ring IEEE 802.5 family, Ethernet IEEE 802.1 10Base-T, Fast Ethernet 100Base-T and Gigabit Ethernet 1000Base-T, optical connections OC-3, OC-12 etc. The remote device 1 typically includes software operating system (OS) component 13 that supports the remote device 1 basic operations/functionality/features and provides access via drivers to hardware level services as well as access to network equipment interfaces via a number of different network protocol stacks 14. The OS and network protocol stacks provide datalink, network and transport access to any number of supported networks including for example WAN protocols such as: ATM, Frame Relay DTE/DCE, X.25 DTE/switching, IP Version 4 (RFC 877/1812) and IP version 6, ISDN Q.Sig (Q.921/Q.931), Transparent HDLC support (TBOP), MX.25 multidrop X.25, XDLC, wireless bearer channel protocols (e.g., Bluetooth, IrDA, GSM/TDMA, CDMA (IS-95), W-CDMA/CDMA2000, FDMA, MOBITEX MPAK, American Mobile ARDIS, ReFLEX-25, GPRS and SAT). In order for a user application 18 to have access to the PKI services provided by the PKI service provider 10, the remote device 1 is equipped with a public key cryptosytem 15, a PKI client 16,and tamper resistant storage 17 components. These components may be software or hardware, or a combination of both. The user application 18 (e.g., an electronic commerce, banking, or brokerage application, etc.) accesses functions offered by the public key cryptosystem 15, which provides cryptographic services using one or more public key algorithm systems (e.g., RSA, Elliptic Curves (ECC), DSA, Rabin, ElGamal, etc.).

The tamper-resistant storage component 17 provides safe containment of private key data. The tamper-resistant storage component 17 may be implemented in software using any number of acceptable standards such as PKCS#5 RSA Laboratories, PKCS #5 - Password-Based Cryptography Standard ("PKCS5") incorporated herein by reference, PKCS#15 [PKCS15] incorporated herein by reference and PKCS#12 RSA Laboratories, PKCS #12 - Personal Information Exchange Syntax Standard ("PKCS12") incorporated herein by reference. Alternatively, the tamper-resistant storage component 17 may be a hardware component with an independent operating environment; (e.g., SmartCards (SIM) or a hardware token storage device with cryptographic token interfaces such as PKCS#11 RSA Laboratories, PKCS #11 - Cryptographic Token Interface Standard ("PKCS 11") incorporated herein by reference). Preferably, the tamper resistant storage component 17 also stores a root CA certificate with which the remote device 1 has been provisioned and which has signed the PKI Gateway's certificate. This enables the remote device to create a trust relationship with the PKI gateway. This relationship may be supported by a legal arrangement or agreement between the operator of the PKI gateway and the remote device. The provisioning of a root certificate on the remote device may be accomplished by a number of conventional methods, such as during manufacture of the remote device or by downloading during initialization/bootstrapping etc. The creation of a trust relationship between the PKI gateway 6 and the remote device 1 is advantageous because the limited memory of a remote device may not permit storage of more than one certificate. The remaining certificates required by the remote device to communicate with PKI service providers 10 may be stored on the PKI gateway if necessary or designed as such. Consequently, a trust relationship between the remote device and PKI gateway permits the remote device to communicate with any number of PKI service providers while having to store only one certificate.

The PKI client 16 component of the remote device 1 communicates with the PKI gateway 6 via the network/device protocol interface 2. The PKI client 16 preferably supports the following set of PKI request types:
i. Certificate Registration - the PKI client 16 sends to the PKI gateway 6 a request to register and certify a new public key that the remote device 1 has either generated or with which it has been provisioned in the past. Protocols that support this functionality include:
   a. PKCS#10 RSA Laboratories, PKCS #10 - Certification Request Syntax Standard ("PKCS10") incorporated herein by reference
   b. IETF PKIX-CMP [[RFC2510]
   c. CMC
   d. WAP WPKI Signed Content request.
   e. Any other PKI certificate request format/protocol.
ii. Certificate Status and Revocation -the PKI client 16 communicates with the PKI gateway 6 as to the status of any referenced certificate issued by the PKI service provider 10 and is serviced by the PKI gateway. Protocols that support this functionality include:
   a. OCSP (RFC 2560)
   b. CRL Profiles (Certificate Revocation Lists)
   c. Any other PKI certificate status and revocation protocol
iii.Certificate Retrieval -the PKI client 16 communicates with the PKI gateway to obtain, verify and return a certificate using any number of alternate formats. The certificate formats supported by the PKI client 16 may include:
   a. X.509 Version 1,2 and 3.
   b. WTLS Certificate
   c. X.968
   d. Any closed PKI system proprietary certificate formats.

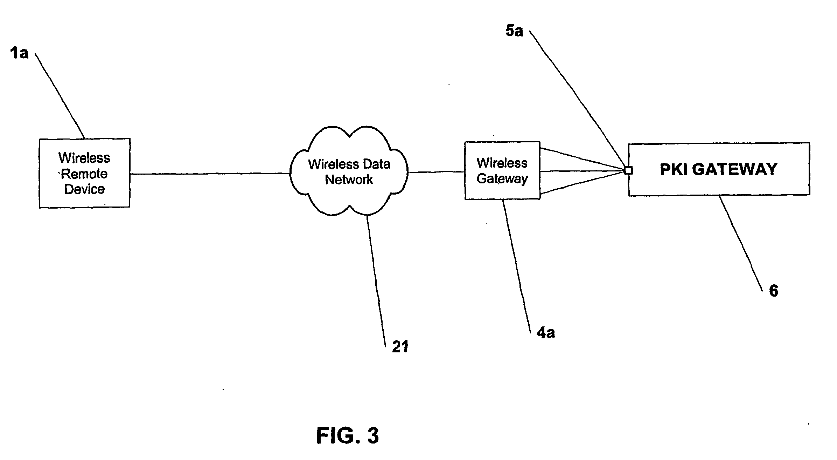

FIG. 3, 4, and 5 illustrate possible network connectivity models for communication between a remote device 1 and the PKI gateway 6. It will be understood by those skilled in the art that there are numerous other connectivity models and the embodiments shown in Figs. 3, 4, and 5 are not intended to be limiting.

Fig. 3 illustrates a network connectivity model for communication between a wireless remote device 1a and the PKI gateway 6 over a wireless networking environment. The wireless remote device 1 a is PKI-enabled (as shown in Fig. 2) and sends and receives PKI certificate management and service messages to and from the PKI gateway 6. In this embodiment, the first data communication network 3 includes a wireless communication network 21 connecting the wireless remote device 1a and a wireless gateway 4a (using a conventional wireless data communication protocol such as Bluetooth, IrDA, GSM/TDMA, CDMA (IS-95), W-CDMA/CDMA2000, FDMA, MOBITEX MPAL, American Mobile ARDIS, ReFLEX-25, GPRS and SAT), which in turn communicates with the PKI gateway 6. The wireless data network 21 is preferably a conventional collection of RF towers, station switches and gateways all interconnected using either a circuit switched or packet switched network. Messages sent from the wireless remote device 1a are processed by the wireless data network 21 and are routed to a wireless gateway 4a which corresponds to the wireless protocol used by the wireless remote device 1a (e.g., a Wireless Application Protocol ("WAP") gateway servicing WAP enabled mobile handsets). The wireless gateway 4a communicates with a corresponding device interface 5a of the PKI gateway 6. The device interface 5a is preferably specific to the communication format utilized by the remote device 1a (and the corresponding wireless gateway 4a).

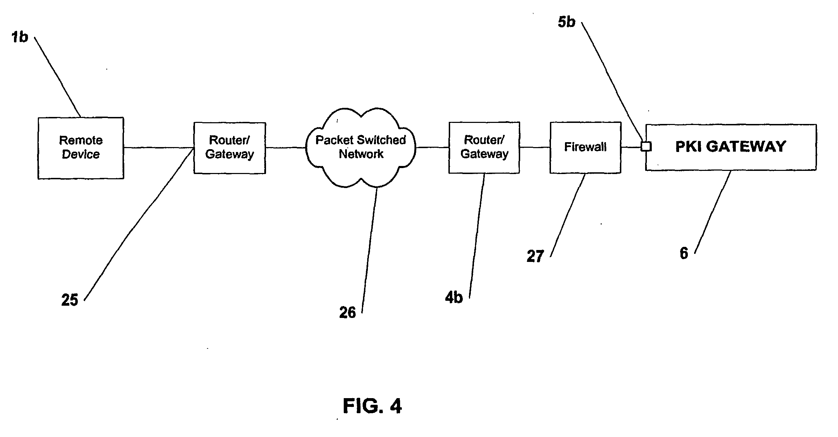

FIG. 4 illustrates a network connectivity model for communication between a remote device 1b and the PKI gateway 6 over a conventional packet-switched network 26. In this embodiment, the first data communication network 3 includes any number of conventional routers or gateways, such as the routers/gateways 25, which route the message through the packet switched network 26 to a router/gateway 4b which corresponds with a device interface 5b. A common protocol suite used in packet-switched networks is TCP/IP, although others may be employed as well. To protect the PKI gateway 6 from unauthorized access, a conventional firewall 27 may be employed. The router/gateway 4b communicates with a corresponding device interface 5b in the PKI gateway 6. The device interface 5b is one which is compatible with the communication format utilized by the remote device 1b.

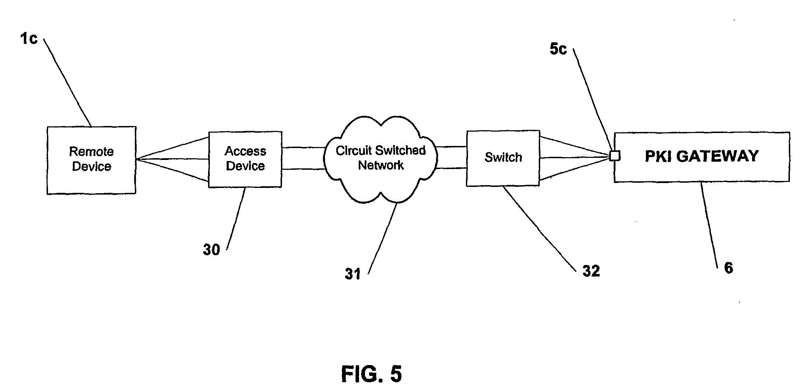

FIG. 5 shows a circuit switched network connectivity model for communications between a remote device 1c and the PKI gateway 6. In this embodiment, the first data communication network 3 includes an access device 30 connected to the circuit-switched network 31. The remote device 1c is preferably a PKI enabled device, such as an Automatic Banking Machine (ABM) or Point of Sale terminal (POS), and may have a number of Virtual Circuits (not shown) connected through a network access device 30 (e.g., a FRAD (Frame Relay Access Device) or X.25 terminal, etc.) to a circuit switched network 31. The PKI gateway 6 is connected to the circuit switched network 31 via a switch or access device 32. In the same manner as described in reference to FIG. 3 and FIG. 4, the PKI gateway 6 employs a device interface 5c for communication between the PKI gateway 6 and the remote device 1c.

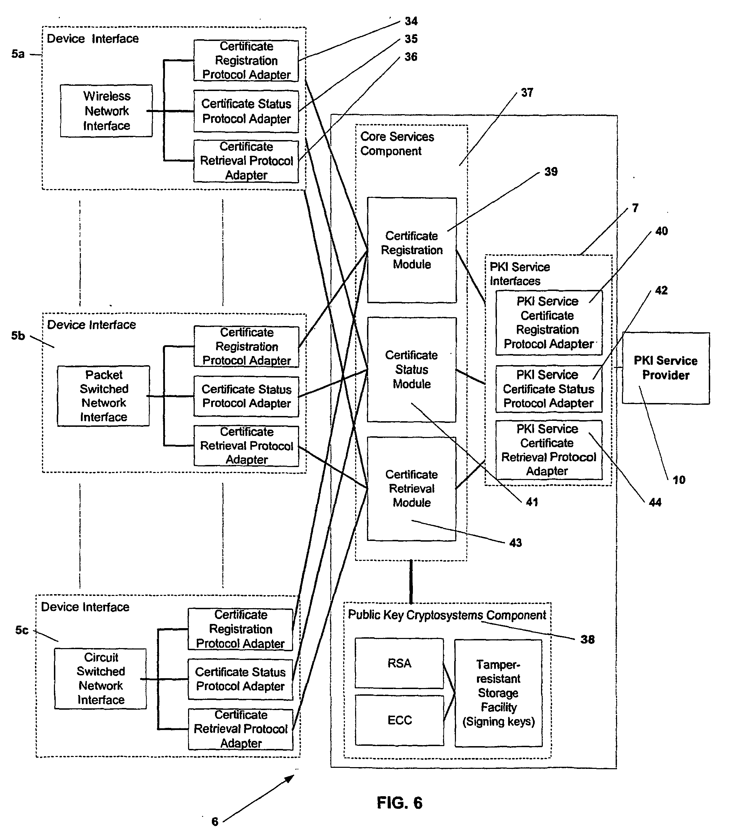

FIG. 6 illustrates a PKI gateway 6 in accordance with the present invention. The various components of the PKI gateway described below may be implemented as a number of distributed computers with network interfaces and hardware components. Alternatively, the components may be software and/or hardware modules residing in a single computer. The PKI gateway 6 includes four main components:
(i) one or more device interfaces 5a, 5b, 5c;
(ii) a core processing component 37
(iii) a public key cryptosystems component 38; and
(iv) one or more PKI service interfaces 7.
Each of these components is described in detail below.

Fig. 6 illustrates a wireless device interface 5a, a device interface 5b for a packet-switched network, and a device interface 5c for a circuit-switched network by way of example only. It will be understood by those skilled in the art that the PKI gateway 6 may include only one of these device interfaces, or any number and combination of these interfaces, or additional interfaces for communication formats not described or shown, and such variations are within the scope of this invention. Each device interface communicates messages, datagrams or packets (as the case may be) over a communication format with which it is compatible. For example, the wireless device interface 5a may manage a TCP/IP HTTP connection to a WAP wireless gateway. The messages are processed by the applicable interface to determine their nature. Accordingly, the PKI gateway 6 employs the device interfaces 5 to service any number of remote devices 1 in any communication format (i.e. network and/or protocol). In addition, the PKI gateway according to the present invention can be easily adapted for communication with a group of remote devices using a new communication format simply by the addition of a new device interface 5. No additional modifications are required to the other components of the PKI gateway.

Certificate Registration messages from the wireless network interface of the wireless device interface 5a are forwarded to a certificate registration protocol adapter 34, which transforms the device specific protocol message to an internal generic certificate registration message. This internal message is assembled using the information contained in the device specific protocol message. Similarly, Certificate Status and Certificate Retrieval messages are transformed into an internal generic protocol messages (such as Extensible Markup Language (XML)) by the certificate status protocol adapter 35, and certificate retrieval protocol adapter 36, respectively. The network interfaces may be constructed from commercially available network/protocol stacks (such as a WAP stack, or Mobitex stack) usually provided by the device/network equipment manufacturer. The protocol adapters 34, 35, 36 may be constructed from commercially available toolkits and libraries using conventional methods. The device interfaces 5b and 5c include identical components to transform the messages transmitted over the corresponding communication format.

As shown in Fig. 6, the device interfaces 5a, 5b, 5c, communicate the messages in the generic internal protocol to the core services component 37.

The core services component 37 includes a certificate registration module 39, which communicates with the certificate registration protocol adapter 34 and handles certificate requests. The certificate registration module 39 processes the certificate request by:
(i) verifying enrolment information including user identity information;
(ii) verifying proof of possession of private key (POP) which confirms the user is in possession of the claimed private key used to sign the public key registration message;
(iii) verifying an out-of-band shared secret;
(iv) any other registration policy enforcement.

The certificate registration module 39 may be a conventionally customized version of a commercially available Registration Authority (RA) product, such as Certicom TrustPoint or Baltimore UniCERT RA. Once the registration request has been processed the certificate registration module 39 determines to which PKI service provider 10 the registration request should be forwarded. This determination can occur in a number of conventional ways, which are typically dependent on the specific application requiring PKI services, or some other known addressing information.

The registration request is signed by using the public key cryptosystems component 38 (described in detail below). The message is then forwarded to the PKI service interface 7 for processing by a PKI service certificate registration protocol adapter 40 which adapts and translates the registration message to a format that can be consumed by the CA or RA of the PKI service provider 10 (described in detail below).

The certificate status module 41 of the core services component 37 forwards the message to a PKI service certificate status protocol adapter 42 of the PKI service interface 7. The certificate status module 41 can be conventionally adapted from OCSP responders available, for example, from ValiCert.

A certificate retrieval module 43 of the core services component 37 composes a query message preferably using the LDAP protocol. However, any other suitable query languages such as SQL, etc may be employed. The certificate retrieval module 43 may be constructed from commercially available LDAP interfacing library (such as Java Naming Directory Interface (JNDI)). The query message is adapted and translated as required by a PKI service certificate retrieval protocol adapter 44 of the PKI service interface 7, and sent to the PKI service provider 10 certificate repository (described in detail below) for retrieval. Once the certificate is returned to the certificate retrieval module 43, it can be transformed to any number of alternate formats. Since the PKI gateway 6 is an entity trusted by the remote device 1, it can perform the verification of the certificate on behalf of the remote device 1. This is especially advantageous if the remote device does not have possession of the root CA certificate that is necessary for authenticating certificates signed under the root CA's trust hierarchy.

Likewise, the PKI service certificate registration protocol adapter 40 and PKI service status protocol adapter 42 of the PKI service interface 7 translate messages from the certificate registration module 39 and the certificate status module 41, respectively, and forward them to the PKI service provider 10. The protocol adapters 40, 42, 44 of PKI interface 7 may be constructed from commercially available toolkits and libraries by methods well known in the art.

As illustrated in Fig. 6, the public key cryptosystems component 38 includes commercially available modules that implement any number of known Public Key algorithm systems, such as, RSA and ECC (available from Certicom Corp.). These components provide the core services component 37 with Public Key decryption and encryption functions. They also provide a number of access functions to a tamper-resistant storage facility that houses and securely stores the PKI gateway signing private keys. The storage facility is preferably implemented in conventional hardware systems (such as the Chrysalis-ITS Luna CA3) with standard interfaces described in specifications such as PKCS#11 [PKCS11].

The PKI service interface 7 communicates with the core services component 37 in the generic internal protocol and adapts/translates internal PKI gateway messages from the generic internal protocol to PKI message protocols that can be consumed by the target PKI service provider 10 components.

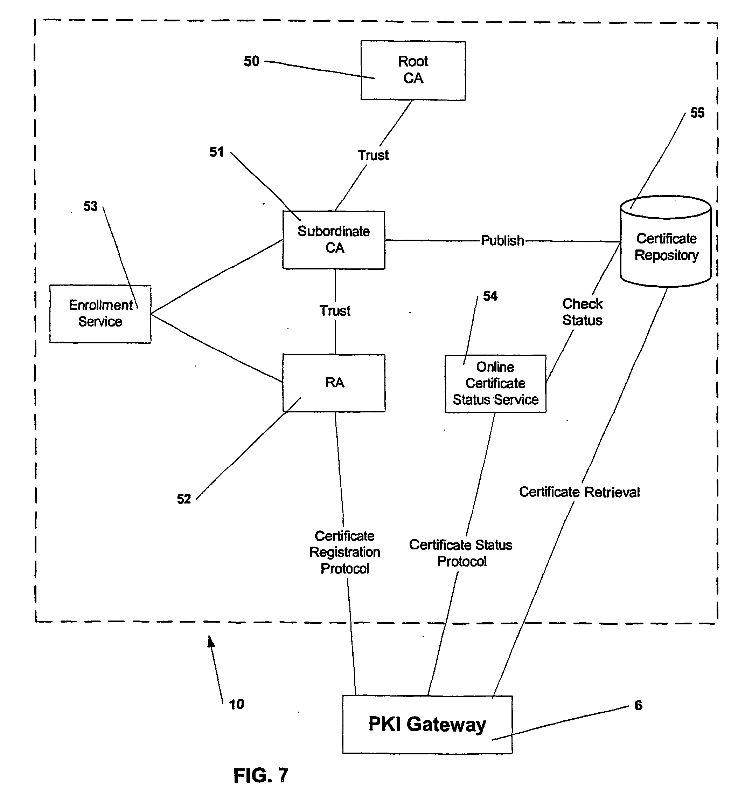

As shown in Fig. 7, the PKI service provider 10 is a known collection of services that are part of the Public Key Infrastructure that enable the management of public key certificates. These components may be implemented as software, hardware, or a combination of software and hardware. Preferably these components are under the physical control of a third party requiring secure communications with its clients, such as a financial institution or a vendor of security technology. Alternatively, the PKI service provider 10 components may be incorporated into the PKI gateway 6.

Fig. 7 shows the PKI service provider 10 components and services are arranged in a trust hierarchy that is rooted in a top level root CA 50. The root CA 50 contains the signing private key under which all subordinate CAs 51 are certified. When the PKI gateway 6 processes a certificate registration request for the remote device 1 as described above, the PKI gateway 6 sends the request to a registration authority (RA) 52 which acts on behalf of the subordinate CA 51. Preferably, the RA 52 further validates the request and performs additional conventional policy enforcement procedures such as that described in Internet X.509 Public Key Infrastructure Certificate Policy and Certification Practices Framework, Chokhani, Ford, IETF PKIX (X.509) working group, http://www.ietf.org/rfc/rfc2527.txt ("RFC2527") incorporated herein by reference. The identity information of the end-user is processed by accessing information from an enrolment service 53. In order to check the certificate status, the PKI gateway 6 accesses online certificate status service 54 which provides information on the revocation or validity of a certificate in the certificate repository 55. The certificate directory 55 is also accessed by the PKI Gateway via a certificate retrieval request. The certificate directory 55 provides the PKI gateway 6 a specific certificate which was requested by the remote device 1.

A method according to various embodiments of the present invention will now be described. The embodiments described are typical of the tasks executed by a PKI system. It will be understood by those skilled in the art that other tasks may be carried out in accordance with the claimed method.

Referring to Figs. 2 and 6, the sequence of steps which are executed when a certification request is sent by a PKI-enabled remote device 1 are described below. The application 18 running on the remote device 1 first generates a public and private key pair using the device public key cryptosystem 15. The application 18 calls a certification function in the PKI client 16. The PKI client 16 concatenates the following: user identification information such as user ID, a random salt (randomly chosen phrase or number or both) and the public key into a buffer. The buffer is then hashed using a secure random hash function such as MD5 or SHA-1. The hash function digests the buffer to produce a unique binary fingerprint or digest. The digest is then encrypted using the private key to produce a POP (Proof of Possession) digital signature. The certification protocol message can then be assembled using public key, user information, salt and digital signature. The message may be in a format conforming to specifications such as PKCS#10, WAP WML Script Crypto.signText, PKIX-CMP, CMC, CMM etc. The message is sent via the first data communication 3 network to a corresponding device interface 5 on PKI gateway 6. The PKI gateway performs the operations set out below on the message and returns an error code/message or exception to the remote device 1 should any operation fail for some reason. Operations performed by the PKI gateway 6 are:
1) verify the proof of possession (POP) of private key, digital signature, using the public key;
2) verify user information, including any previously issued shared secret such as a password for further verification of user identification information.

If the above verifications are successful, the certificate registration module 39 of the core services component 37 forwards the certification information and public key to the PKI service certificate registration protocol adapter 40 of the PKI service interface 7, which then formulates the certificate request message intended for the subordinate CA 51 of the PKI service provider 10. The subordinate CA 51 then generates a new certificate and signs it using the subordinate CA 51 private signing key. The certificate is deposited in the certificate repository 55. A certificate identifier in the form of a URL (Universal Resource Locator) or DN (Distinguished Name) or SN (Serial Number) is returned to the PKI gateway 6 as part of the confirmation. The PKI service certificate registration protocol adapter 40 of the PKI service interface 7 receives the certificate identifier from the PKI service provider 10 and communicates it to the certificate registration module 39 of the core services component 37. The certificate registration module 39 forwards the certificate identifier to the certificate registration protocol adapter 34 which translates the message so that the certificate identifier can be returned the to the PKI client 16 on the requesting remote device 1 as a confirmation/ACK. The remote device stores the private key in the tamper-resistant storage 17 along with the certificate identifier that is used in later operations to reference the user certificate created at the PKI service provider 10.

Continuing to refer to Figs. 2 and 6, the sequence of steps executed during a certificate retrieval request is described below. The application 18 running on the remote device 1 may be required to gain access to a third party's public key via the party's certificate. The certificate is retrieved and delivered to the PKI client 16 running on the remote device by the PKI gateway 6. The certificate is delivered to the PKI client in 16 any format specified by the application 18 or PKI client 16.

The PKI client 16 of the remote device 1 sends a certificate retrieval request message to the PKI gateway 6 which contains the certificate identification referencing the intended certificate. The certificate identification may be a URL, DN or serial number of the certificate. The request also contains a certificate format parameter, which specifies in what format the PKI client would like to receive the certificate. Formats which are available may include X.509v1, X.509v2, X.509v3, WTLS and X.968. The certificate format parameter may optionally specify any other format supported by the PKI gateway 6. The request is received by the certificate retrieval protocol adapter 36 of the device interface 5, and is translated into the generic PKI gateway internal protocol before being forwarded to the certificate retrieval module 43. Upon receipt of the message, the certificate retrieval module 43 processes the request. A query is formulated (using LDAP, SQL, or other suitable protocol) and sent to the PKI service retrieval protocol adapter 44 of the PKI service interface 7, where it is transformed into a communication format understood by the PKI service provider 10. The message is then sent to the certificate repository 55 of the target PKI service provider 10 via the PKI service certificate retrieval protocol adapter 44. If the certificate cannot be found in the certificate repository 55, an error code is returned to the PKI gateway 6 indicating a search error. If the certificate is found, it is returned to the PKI gateway 6 (in the manner described above) preferably in the form of a X.509v3 certificate. The certificate retrieval module 43 verifies the CA signature on the certificate and may optionally verify other attributes as well. The certificate retrieval module 43 then forwards the message to the certificate retrieval protocol adapter 36 of the device interface 5, which translates and converts the certificate to the format specified by the certificate format parameter. The newly converted certificate must be resigned using the PKI gateway private keys as the translation operation invalidates the PKI service provider CA signature on the X.509v3 certificate. The newly converted certificate is then returned to the PKI client 16 of the remote device 1. The PKI client uses the PKI gateway public key to verify the signature and can then proceed to forward the certificate for further conventional processing by the application 18.

## Claims

1. A Public Key Infrastructure "PKI" system comprising:
a PKI gateway (7) capable of communicating with a plurality of remote devices (1) and
at least one PKI service provider (10) communicating with the PKI gateway;
wherein the PKI gateway comprises a plurality of device interfaces (5) each device interface being respectively compatible with each of the different communication formats,
wherein each device interface is **characterised by**:
a certificate registration protocol adapter configured to transform a communication received by the device interface into an internal generic protocol message;
a certificate status protocol adapter configured to transform a communication received by the device interface into an internal generic protocol message; and
a certificate retrieval protocol adapter configured to transform a communication received by the device interface into an internal generic protocol message.

2. A PKI gateway (7) for enabling communication between at least one PKI service provider (10) and a plurality of remote devices (1) using different communication formats, the PKI gateway is **characterised by**:
(a) at least one device interface (5a) adapted for communication with the remote devices, wherein each device interface comprises:
a certificate registration protocol adapter configured to transform a communication received by the device interface into an internal generic protocol message;
a certificate status protocol adapter configured to transform a communication received by the device interface into an internal generic protocol message; and
a certificate retrieval protocol adapter configured to transform a communication received by the device interface into an internal generic protocol message;
(b) a core processing component (37) in communication with the at least one device interface;
(c) a public key cryptosystems component (38) in communication with the core processing component; and
(d) at least one PKI service interface (7) in communication with the core processing component, the PKI service interface being adapted for communication with a PKI service provider.

3. The PKI gateway of claim 2, wherein the at least one device interface comprises a plurality of device interfaces, each device interface being compatible with a specific communication format.

4. The PKI system of claim 1, wherein the plurality of remote devices utilize different communication formats.

5. The PKI system of claim 4, wherein the plurality of remote devices communicate over different networks.

6. The PKI system of claim 5, wherein the plurality of remote devices communicate using different protocols.

7. The PKI system of claim 5, wherein one of the networks is a first data communication network.

8. The PKI system of claim 7, wherein the first data communication network is a wireless data communication network

9. The PKI system of claim 7, wherein the first communication network is a packet-switched data communication network.

10. The PKI system of claim 7, wherein the first communication network is a circuit-switched data communication network.

11. The PKI system of claim 7, further comprising one of a network gateway, a network router, and a network switch in communication with the PKI gateway.

12. The PKI system of claim 7, wherein the PKI gateway and the at least one PKI service provider communicate over a second data communication network.

13. The PKI system of claim 12, wherein the first data communication network and the second data communication network are the same network.

14. The PKI system of claim 1 or PKI gateway of claim 3, wherein the PKI gateway further comprises:
(a) a core processing component;
(b) a public key cryptosystems component in communication with the core processing component; and
(c) at least one PKI service interface adapted for communication with the PKI service provider.

15. The PKI system of claim 1 or PKI gateway of claim 2, wherein the PKI gateway further comprises:
(a) a certificate registration module;
(b) a certificate status module; and
(c) a certificate retrieval module.

16. The PKI system or gateway of claim 15, wherein the certificate registration protocol adapter is capable of communicating with the certificate registration module.

17. The PKI system or gateway of claim 15, wherein the certificate status protocol adapter is capable of communicating with the certificate status module.

18. The PKI system or gateway of claim 15, wherein the certificate retrieval protocol adapter is capable of communicating with the certificate retrieval module.

19. The PKI system or gateway of claim 15, wherein the at least one PKI service interface comprises:
(a) a PKI service certificate registration protocol adapter configured to transform a communication received by the PKI service interface;
(b) a PKI service certificate status protocol adapter configured to transform a communication received by the PKI service interface; and
(c) a PKI service certificate retrieval protocol adapter configured to transform a communication received by the PKI service interface.

20. The PKI system or gateway of claim 19, wherein the certificate registration module is capable of communicating with PKI service certificate registration protocol adapter.

21. The PKI system or gateway of claim 19, wherein the certificate status module is capable of communicating with the PKI service certificate status protocol adapter.

22. The PKI system or gateway of claim 19, wherein the certificate retrieval module is capable of communicating with the PKI service certificate retrieval protocol adapter.

23. The PKI system or gateway of claim 14, wherein the public key cryptosystems component comprises a tamper resistant storage facility.

24. The PKI system of claim 4, wherein each remote device trusts the PKI gateway.

25. The PKI system of claim 24, wherein the PKI gateway stores a plurality of certificates required for each remote device to communicate with a PKI service provider.

26. The PKI system of claim 25, wherein each remote device stores one certificate required to communicate with the PKI gateway.

27. The PKI gateway of claim 3, wherein the at least one PKI service interface is adapted for communication with the PKI service provider.

28. A method of enabling a communication between a PKI service provider and a plurality of remote devices using different communication formats, the method comprising:
(a) receiving a message in a first communication format sent from one of the plurality of remote devices to a PKI gateway;
(b) translating the message from the first communication format to a generic communication format used by the PKI gateway, wherein
the step of translating is carried out by a device interface comprising:
a certificate registration protocol adapter configured to transform a communication received by the device interface into an internal generic protocol message;
a certificate status protocol adapter configured to transform a communication received by the device interface into an internal generic protocol message; and
a certificate retrieval protocol adapter configured to transform a communication received by the device interface into an internal generic protocol message;
(c) translating the message from the generic communication format to a second communication format used by the PKI service provider; and
(d) transmitting the message in the second communication format from the PKI gateway to the PKI service provider.

29. The method of claim 28, wherein the message is one selected from the group of a certificate retrieval message, a certificate status message, and a certificate registration message.

30. The method of claim 28 or 29, wherein the first communication format is selected from the group of a wireless network, a packet-switched network, and circuit-switched network.

31. The method of claim 29, wherein the wireless network supports a protocol selected from the group of Bluetooth, IrDA, GSM, TDMA, CDMA, W-CDMA, CDMA2000, FDMA, MOBITEX MPAL, American Mobile ARDIS, ReFLEX-25, GPRS, and SAT.

32. The method of claim 29, wherein the packet-switched network supports the TCP/IP protocol.

33. The method of claim 28, wherein the translation of the message from the generic communication format to the second communication format is carried out by a PKI service interface.

34. The method of claim 33, wherein the PKI service interface comprises:
(a) a PKI service certificate registration protocol adapter configured to transform a communication received by the PKI service interface;
(b) a PKI service certificate status protocol adapter configured to transform a communication received by the PKI service interface; and
(c) a PKI service certificate retrieval protocol adapter configured to transform a communication received by the PKI service interface.

35. The method of claim 29, wherein the generic communication format is XML.

## Patentansprüche

1. Infrastruktursystem mit öffentlichem Schlüssel (Public Key Infrastructure, PKI) mit:
einem PKI-Gateway (7), der mit einer Vielzahl von Ferneinrichtungen (1) kommunizieren kann, und
zumindest einem PKI-Dienstanbieter (10), der mit dem PKI-Gateway kommuniziert,
wobei der PKI-Gateway eine Vielzahl von Einrichtungsschnittstellen (5) umfaßt und jede Einrichtungsschnittstelle jeweils mit jedem der unterschiedlichen Kommunikationsformate kompatibel ist, wobei jede Einrichtungsschnittstelle **gekennzeichnet ist durch**:
einen Zertifikatregistrierungs-Protokolladapter, der eingerichtet ist, eine von einer Einrichtungsschnittstelle empfangene Nachricht in eine interne generische Protokollnachricht umzuwandeln;
einen Zertifikatstatus-Protokolladapter, der eingerichtet ist, eine von der Einrichtungsschnittstelle empfangene Nachricht in eine interne generische Protokollnachricht umzuwandeln; und
einen Zertifikatabruf-Protokolladapter, der eingerichtet ist, eine von der Einrichtungsschnittstelle empfangene Nachricht in eine interne generische Protokollnachricht umzuwandeln.

2. PKI-Gateway (7), der einen Datenaustausch zwischen zumindest einem PKI-Dienstanbieter (10) und einer Vielzahl von Ferneinrichtungen (1) ermöglicht, welche unterschiedliche Kommunikationsformate verwenden, wobei der PKI-Gateway **gekennzeichnet ist durch**:
(a) zumindest eine Einrichtungsschnittstelle (5a), die zur Kommunikation mit den Ferneinrichtungen geeignet ist, wobei jede Einrichtungsschnittstelle umfaßt:
einen Zertifikatregistrierungs-Protokolladapter, der eingerichtet ist, eine von der Einrichtungsschnittstelle empfangene Nachricht in eine interne generische Protokollnachricht umzuwandeln;
einen Zertifikatstatus-Protokolladapter, der eingerichtet ist, eine von der Einrichtungsschnittstelle empfangene Nachricht in eine interne generische Protokollnachricht umzuwandeln; und
einen Zertifikatabruf-Protokolladapter, der eingerichtet ist, eine von der Einrichtungsschnittstelle empfangen Nachricht in eine interne generische Protokollnachricht umzuwandeln;
(b) eine Kernverarbeitungskomponente (37), die in Verbindung mit zumindest einer Einrichtungsschnittstelle steht;
(c) eine Verschlüsselungssystemkomponente (38) mit öffentlichem Schlüssel, die in Verbindung mit der Kernverarbeitungskomponente steht; und
(d) zumindest eine PKI-Dienstschnittstelle (7), die in Verbindung mit der Kernverarbeitungskomponente steht, wobei die PKI-Dienstschnittstelle zur Kornmunikation mit einem PKI-Dienstanbieter geeignet ist.

3. PKI-Gateway nach Anspruch 2, wobei zumindest eine Einrichtungsschnittstelle eine Vielzahl von Einrichtungsschnittstellen umfaßt, wobei jede Einrichtungsschnittstelle mit einem spezifischen Kommunikationsformat kompatibel ist.

4. PKI-System nach Anspruch 1, wobei die Vielzahl von Ferneinrichtungen unterschiedliche Kommunikationsformate verwenden.

5. PKI-System nach Anspruch 4, wobei die Vielzahl von Femeinrichtungen miteinander über unterschiedliche Netze kommunizieren.

6. PKI-System nach Anspruch 5, wobei die Vielzahl von Ferneinrichtungen unter Verwendung unterschiedlicher Protokolle miteinander kommunizieren.

7. PKI-System nach Anspruch 5, wobei eines der Netze ein erstes Datenkommunikationsnetz ist.

8. PKI-System nach Anspruch 7, wobei das erste Datenkommunikationsnetz ein drahtloses Datenkommunikationsnetz ist.

9. PKI-System nach Anspruch 7, wobei das erste Kommunikationsnetz ein paketvermitteltes Datenkommunikationsnetz ist.

10. PKI-System nach Anspruch 7, wobei das erste Kommunikationsnetz ein leitungsvermitteltes Datenkommunikationsnetz ist.

11. PKI-System nach Anspruch 7, das ferner einen Netz-Gateway, einen Netz-Router und einen Netz-Switch umfaßt, die mit dem PKI-Gateway in Verbindung stehen.

12. PKI-System nach Anspruch 7, wobei das PKI-Gateway und zumindest ein PKI-Dienstanbieter über ein zweites Datenkommunikationsnetz kommunizieren.

13. PKI-System nach Anspruch 12, wobei das erste Datenkommunikationsnetz und das zweite Datenkommunikationsnetz das gleiche Netz sind.

14. PKI-System nach Anspruch 1 oder PKI-Gateway nach Anspruch 3, wobei der PKI-Gateway ferner umfaßt:
(a) eine Kemverarbeitungskomponente;
(b) eine Verschlüsselungssystemkomponente mit öffentlichem Schlüssel, die mit der Kemverarbeitungskomponente in Verbindung steht; und
(c) zumindest eine PKI-Dienstschnittstelle, die zur Kommunikation mit dem PKI-Dienstanbieter geeignet ist.

15. PKI-System nach Anspruch 1 oder PKI-Gateway nach Anspruch 2, wobei der PKI-Gateway ferner umfaßt:
(a) ein Zertifikatregistrierungsmodul;
(b) ein Zertifikatstatusmodul; und
(c) ein Zertifikatsabrufmodul.

16. PKI-System oder Gateway nach Anspruch 15, wobei der Zertifikatregistrierungs-Protokolladapter mit dem Zertifikatregistrierungsmodul kommunizieren kann.

17. PKI-System oder Gateway nach Anspruch 15, wobei der Zertifikatstatus-Protokolladapter mit dem Zertifikatsstatusmodul kommunizieren kann.

18. PKI-System oder Gateway nach Anspruch 15, wobei der Zertifikatsabruf-Protokolladapter mit dem Zertifikatabrufmodul kommunizieren kann.

19. PKI-System oder Gateway nach Anspruch 15, wobei zumindest eine PKI-Dienstschnittstelle umfaßt:
(a) einen Zertifikatregistrierungs-Protokolladapter für PKI-Dienste, der eingerichtet ist, eine von der PKI-Dienstschnittstelle empfangene Nachricht umzuwandeln;
(b) einen Zertifikatstatus-Protokolladapter für PKI-Dienste, der eingerichtet ist, eine von der PKI-Dienstschnittstelle empfangene Nachricht umzuwandeln; und
(c) einen Zertifikatabruf-Protokolladapter für PKI-Dienste, der eingerichtet ist, eine von der PKI-Dienstschnittstelle empfangene Nachricht umzuwandeln.

20. PKI-System oder Gateway nach Anspruch 19, wobei das Zertifikatregistrierungsmodul mit dem Zertifikatregistrierungs-Protokolladapter für PKI-Dienste kommunizieren kann.

21. PKI-System oder Gateway nach Anspruch 19, wobei das Zertifikatstatusmodul mit dem Zertifikatstatus-Protokolladapter für PKI-Dienste kommunizieren kann.

22. PKI-System oder Gateway nach Anspruch 19, wobei das Zertifikatabrufmodul mit dem Zertifikatabruf-Protokolladapter für PKI-Dienste kommunizieren kann.

23. PKI-System oder Gateway nach Anspruch 14, wobei die Verschlüsselungssystemkomponente mit öffentlichem Schlüssel eine gegen unerlaubte Eingriffe geschützte Speichereinheit umfaßt.

24. PKI-System nach Anspruch 4, wobei jede Ferneinrichtung dem PKI-Gateway vertraut.

25. PKI-System nach Anspruch 24, wobei der PKI-Gateway eine Vielzahl von Zertifikaten speichert, die für jede Ferneinrichtung zur Kommunikation mit einem PKI-Dienstanbieter erforderlich sind.

26. PKI-System nach Anspruch 25, wobei jede Ferneinrichtung ein Zertifikat speichert, das zum Kommunizieren mit dem PKI-Gateway erforderlich ist.

27. PKI-Gateway nach Anspruch 3, wobei zumindest eine PKI-Dienstschnittstelle zur Kommunikation mit dem PKI-Dienstanbieter geeignet ist.

28. Verfahren zum Ermöglichen einer Kommunikation zwischen einem PKI-Dienstanbieter und einer Vielzahl von Ferneinrichtungen, die unterschiedliche Kommunikationsformate verwenden, wobei das Verfahren umfaßt:
(a) Empfangen einer Nachricht in einem ersten Kommunikationsformat, die von einer Ferneinrichtung an einen PKI-Gateway geschickt wurde;
(b) Übersetzen der Nachricht von dem ersten Kommunikationsformat in ein generisches Kommunikationsformat, das von dem PKI-Gateway verwendet wird,
wobei
der Schritt des Übersetzens von einer Einrichtungsschnittstelle durchgeführt wird, die folgende Merkmale aufweist:
einen Zertifikatregistrierungs-Protokolladapter, der eingerichtet ist, eine von der Einrichtungsschnittstelle empfangene Nachricht in eine interne generische Protokollnachricht umzuwandeln;
einen Zertifikatstatus-Protokolladapter, der eingerichtet ist, eine von der Einrichtungsschnittstelle empfangene Nachricht in eine interne generische Protokollnachricht umzuwandeln; und
einen Zertifikatabruf-Protokolladapter, der eingerichtet ist, eine von der Einrichtungsschnittstelle empfangene Nachricht in eine interne generische Protokollnachricht umzuwandeln;
(c) Übersetzen der Nachricht von dem generischen Kommunikationsformat in ein zweites Kommunikationsformat, welches von dem PKI-Dienstanbieter verwendet wird; und
(d) Übertragen der Nachricht von dem PKI-Gateway an den PKI-Dienstanbieter in dem zweiten Kommunikationsformat.

29. Verfahren nach Anspruch 28, wobei die Nachricht aus der Gruppe: Zertifikatabrufnachricht, Zertifikatstatusnachricht und Zertifikatregistrierungsnachricht ausgewählt ist.

30. Verfahren nach Anspruch 28 oder 29, wobei das erste Kommunikationsformat aus der Gruppe: drahtloses Netz, paketvermitteltes Netz und leitungsvermitteltes Netz ausgewählt ist.

31. Verfahren nach Anspruch 29, wobei das drahtlose Netz ein Protokoll unterstützt, das aus der Gruppe: Bluetooth, IrDA, GSM, TDMA, CDMA, W-CDMA, CDMA2000, FDMA, MOBITEX MPAL, American Mobile ARDIS, ReFLEX-25, GPRS und SAT ausgewählt ist.

32. Verfahren nach Anspruch 29, wobei das paketvermittelte Netz das TCP/IP-Protokoll unterstützt.

33. Verfahren nach Anspruch 28, wobei die Übersetzung der Nachricht von dem generischen Kommuhikationsformat in das zweite Kommunikationsformat durch eine PKI-Dienstschnittstelle durchgeführt wird.

34. Verfahren nach Anspruch 33, wobei die PKI-Dienstschnittstelle umfaßt:
(a) einen Zertifikatregistrierungs-Protokolladapter für PKI-Dienste, der konfiguriert ist, eine von der PKI-Dienstschnittstelle empfangene Nachricht umzuwandeln;
(b) einen Zertifikatstatus-Protokolladapter für PKI-Dienste, der konfiguriert ist, eine von der PKI-Dienstschnittstelle empfangene Nachricht umzuwandeln; und
(c) einen Zertifikatabruf-Protokolladapter für PKI-Dienste, der konfiguriert ist, eine von der PKI-Dienstschnittstelle empfangene Nachricht umzuwandeln.

35. Verfahren nach Anspruch 29, wobei das generische Kommunikationsformat XML ist.

## Revendications

1. Système d'infrastructure de clé publique "PKI", comprenant:
une passerelle de clé publique PKI (7) capable de communiquer avec une pluralité de dispositifs externes (1); et
au moins un fournisseur de services PKI (10) qui communique avec la passerelle PKI;
dans lequel la passerelle PKI comprend une pluralité d'interfaces de dispositif (5), chaque interface de dispositif étant respectivement compatible avec chacun des différents formats de communication,
dans lequel chaque interface de dispositif est **caractérisée par**:
un adaptateur de protocole d'enregistrement de certificat configuré pour transformer une communication reçue par l'interface de dispositif en un message de protocole générique interne;
un adaptateur de protocole de statut de certificat configuré pour transformer une communication reçue par l'interface de dispositif en un message de protocole générique interne; et
un adaptateur de protocole de recouvrement de certificat configuré pour transformer une communication reçue par l'interface de dispositif en un message de protocole générique interne.

2. Passerelle PKI (7) pour permettre une communication entre au moins un fournisseur de services PKI (10) et une pluralité de dispositifs externes (1) qui utilisent des formats de communication différents, la passerelle PKI étant **caractérisée par**:
(a) au moins une interface de dispositif (5a) apte à communiquer avec les dispositifs externes, dans laquelle chaque interface de dispositif comprend:
un adaptateur de protocole d'enregistrement de certificat configuré pour transformer une communication reçue par l'interface de dispositif en un message de protocole générique interne;
un adaptateur de protocole de statut de certificat configuré pour transformer une communication reçue par l'interface de dispositif en un message de protocole générique interne; et
un adaptateur de protocole de recouvrement de certificat configuré pour transformer une communication reçue par l'interface de dispositif en un message de protocole générique interne;
(b) un composant de traitement central (37) en communication avec au moins une interface de dispositif;
(c) un composant de système cryptographique de clé publique (38) en communication avec le composant de traitement central; et
(d) au moins une interface de services PKI (7) en communication avec le composant de traitement central, l'interface de services PKI étant apte à communiquer avec un fournisseur de services PKI.

3. Passerelle PKI selon la revendication 2, dans laquelle au moins une interface de dispositif comprend une pluralité d'interfaces de dispositif, chaque interface de dispositif étant compatible avec un format de communication spécifique.

4. Système PKI selon la revendication 1, dans lequel la pluralité de dispositifs externes utilisent des formats de communication différents.

5. Système PKI selon la revendication 4, dans lequel la pluralité de dispositifs externes communiquent sur des réseaux différents.

6. Système PKI selon la revendication 5, dans lequel la pluralité de dispositifs externes communiquent en utilisant des protocoles différents.

7. Système PKI selon la revendication 5, dans lequel l'un des réseaux est un premier réseau de communication de données.

8. Système PKI selon la revendication 7, dans lequel le premier réseau de communication de données est un réseau de communication de données sans fil.

9. Système PKI selon la revendication 7, dans lequel le premier réseau de communication est un réseau de communication de données du type à commutation par paquets.

10. Système PKI selon la revendication 7, dans lequel le premier réseau de communication est un réseau de communication de données du type à commutation de circuits.

11. Système PKI selon la revendication 7, comprenant en outre un élément parmi une passerelle de réseau, un aiguilleur de réseau et un commutateur de réseau en communication avec la passerelle PKI.

12. Système PKI selon la revendication 7, dans lequel la passerelle PKI et au moins un fournisseur de services PKI communiquent sur un deuxième réseau de communication de données.

13. Système PKI selon la revendication 12, dans lequel le premier réseau de communication de données et le deuxième réseau de communication de données sont le même réseau.

14. Système PKI selon la revendication 1, ou passerelle PKI selon la revendication 3, dans lequel/laquelle la passerelle PKI comprend en outre:
(a) un composant de traitement central;
(b) un composant de système cryptographique de clé publique en communication avec le composant de traitement central; et
(c) au moins une interface de services PKI apte à communiquer avec le fournisseur de services PKI.

15. Système PKI selon la revendication 1, ou passerelle PKI selon la revendication 2, dans lequel/laquelle la passerelle PKI comprend en outre:
(a) un module d'enregistrement de certificat;
(b) un module de statut de certificat; et
(c) un module de recouvrement de certificat.

16. Système ou passerelle PKI selon la revendication 15, dans lequel/laquelle l'adaptateur de protocole d'enregistrement de certificat est capable de communiquer avec le module d'enregistrement de certificat.

17. Système ou passerelle PKI selon la revendication 15, dans lequel/laquelle l'adaptateur de protocole de statut de certificat est capable de communiquer avec le module de statut de certificat.

18. Système ou passerelle PKI selon la revendication 15, dans lequel/laquelle l'adaptateur de protocole de recouvrement de certificat est capable de communiquer avec le module de recouvrement de certificat.

19. Système ou passerelle PKI selon la revendication 15, dans lequel/laquelle au moins une interface de services PKI comprend:
(a) un adaptateur de protocole d'enregistrement de certificat de services PKI configuré pour transformer une communication reçue par l'interface de services PKI;
(b) un adaptateur de protocole de statut de certificat de services PKI configuré pour transformer une communication reçue par l'interface de services PKI; et
(c) un adaptateur de protocole de recouvrement de certificat de services PKI configuré pour transformer une communication reçue par l'interface de services PKI.

20. Système ou passerelle PKI selon la revendication 19, dans lequel/laquelle le module d'enregistrement de certificat est capable de communiquer avec l'adaptateur de protocole d'enregistrement de certificat de services PKI.

21. Système ou passerelle PKI selon la revendication 19, dans lequel/laquelle le module de statut de certificat est capable de communiquer avec l'adaptateur de protocole de statut de certificat de services PKI.

22. Système ou passerelle PKI selon la revendication 19, dans lequel/laquelle le module de recouvrement de certificat est capable de communiquer avec l'adaptateur de protocole de recouvrement de certificat de services PKI.

23. Système ou passerelle PKI selon la revendication 14, dans lequel/laquelle le composant de système cryptographique de clé publique comprend une installation de stockage inviolable.

24. Système PKI selon la revendication 4, dans lequel chaque dispositif externe fait confiance à la passerelle PKI.

25. Système PKI selon la revendication 24, dans lequel la passerelle PKI stocke une pluralité de certificats requis pour la communication de chaque dispositif externe avec un fournisseur de services PKI.

26. Système PKI selon la revendication 25, dans lequel chaque dispositif externe stocke un certificat requis pour communiquer avec la passerelle PKI.

27. Passerelle PKI selon la revendication 3, dans laquelle au moins une interface de services PKI est apte à communiquer avec le fournisseur de services PKI.

28. Procédé pour autoriser une communication entre un fournisseur de services PKI et une pluralité de dispositifs externes utilisant des formats de communication différents, le procédé comprenant:
(a) la réception d'un message dans un premier format de communication envoyé à partir d'un parmi une pluralité de dispositifs externes à une passerelle PKI;
(b) la conversion du message à partir du premier format de communication en un format de communication générique utilisé par la passerelle PKI, dans lequel
l'étape de conversion est exécutée par une interface de dispositif comprenant:
un adaptateur de protocole d'enregistrement de certificat configuré pour transformer une communication reçue par l'interface de dispositif en un message de protocole générique interne;
un adaptateur de protocole de statut de certificat configuré pour transformer une communication reçue par l'interface de dispositif en un message de protocole générique interne; et
un adaptateur de protocole de recouvrement de certificat configuré pour transformer une communication reçue par l'interface de dispositif en un message de protocole générique interne;
(c) la conversion du message à partir du format de communication générique en un deuxième format de communication utilisé par le fournisseur de services PKI; et
(d) la transmission du message dans le deuxième format de communication à partir de la passerelle PKI au fournisseur de services PKI.

29. Procédé selon la revendication 28, dans lequel le message est un message sélectionné parmi le groupe composé d'un message de recouvrement de certificat, un message de statut de certificat et un message d'enregistrement de certificat.

30. Procédé selon la revendication 28 ou 29, dans lequel le premier format de communication est sélectionné parmi le groupe composé d'un réseau sans fil, un réseau du type à commutation par paquets et un réseau du type à commutation de circuits.

31. Procédé selon la revendication 29, dans lequel le réseau sans fil supporte un protocole sélectionné parmi le groupe composé de Bluetooth, IrDA, GSM, TDMA, CDMA, W-CDMA, CDMA2000, FDMA, MOBITEX MPAL, American Mobile ARDIS, ReFLEX-25, GPRS et SAT.

32. Procédé selon la revendication 29, dans lequel le réseau du type à commutation par paquets supporte le protocole TCP/IP.

33. Procédé selon la revendication 28, dans lequel la conversion du message à partir du format de communication générique en le deuxième format de communication est exécutée par une interface de services PKI.

34. Procédé selon la revendication 33, dans lequel l'interface de services PKI comprend:
(a) un adaptateur de protocole d'enregistrement de certificat de services PKI configuré pour transformer une communication reçue par l'interface de services PKI;
(b) un adaptateur de protocole de statut de certificat de services PKI configuré pour transformer une communication reçue par l'interface de services PKI; et
(c) un adaptateur de protocole de recouvrement de certificat de services PKI configuré pour transformer une communication reçue par l'interface de services PKI.

35. Procédé selon la revendication 29, dans lequel le format de communication générique est le XML.
